# EUROPÄISCHE PATENTSCHRIFT

(11) **EP 3 093 189 B1**
(45) Veröffentlichungstag und Bekanntmachung des Hinweises auf die Patenterteilung: **29.08.2018**
(21) Anmeldenummer: 16167424.7
(22) Anmeldetag: 28.04.2016
(51) Int. Cl.: B60P 1/16, B60P 1/28, B60P 1/32

(54) **KIPPEINRICHTUNG FÜR 3-SEITEN-KIPPER MIT SEITLICHER VERSCHIEBUNG**
TIPPING DEVICE FOR 3-SIDED TIPPER WITH LATERAL TRANSLATION
DISPOSITIF A BASCULE POUR BENNE BASCULANTE SUR 3 COTES A BASCULEMENT LATERAL

(30) Priorität: 12.05.2015 CH 6612015
(43) Veröffentlichungstag der Anmeldung: 16.11.2016
(73) Patentinhaber: BARATTO Fahrzeugbausysteme GmbH, 8587 Oberaach (CH)
(72) Erfinder: Baratto, Ranieri, 8587 Oberaach (CH)
(74) Vertreter: Schneider Feldmann AG Patent- und Markenanwälte

(56) Entgegenhaltungen:
- WO-A1-96/16835
- DE-B- 1 003 050
- GB-A- 263 974
- US-A- 1 960 833

## Beschreibung

### Technisches Gebiet

Die Erfindung betrifft eine Kippeinrichtung für 3-Seiten-Kipper, insbesondere leichte oder mittelschwere Fahrzeuge, umfassend eine Kippplattform und eine an der Kippplattform und an einem Fahrzeugchassis gelagerte Hebevorrichtung zur Ausführung einer Kippbewegung der Kippplattform; wobei die Kippplattform an vier in einem Rechteck angeordneten Punkten mittels lösbaren Gelenkverbindungen gelenkig mit dem Fahrzeugchassis verbindbar ist, so dass eine Kippbewegung nach beiden Seiten und nach hinten möglich ist.

### Technischer Hintergrund

3-Seiten-Kipper, die eine Kippbewegung wahlweise zu beiden Seiten oder nach hinten ausführen können sind bekannt (z.B. DE2318364). Die gängigsten 3-Seiten-Kipper weisen Gelenkverbindungen in Form von Kugelgelenken auf. Dabei ist am Fahrzeugchassis jeweils ein kugelförmiger Gelenkkopf resp. eine Gelenkkugel direkt oder indirekt befestigt, auf welcher eine nach unten offene Gelenkpfanne gelagert ist. Mit einem Arretierbolzen kann die Gelenkpfanne gegenüber einem Abheben vom Gelenkkopf gesichert werden, so dass lediglich eine Drehung möglich ist. Um eine Kippbewegung auszuführen, werden mit zwei Arretierbolzen die hinteren, linken oder rechten Gelenkverbindungen gesichert, womit eine Kippbewegung nach hinten, links respektive rechts bewirkt wird.

Bei den meisten 3-Seiten-Kipper sind die Gelenkverbindung resp. Kipplager unmittelbar unterhalb der Ladeplattform im Randbereich angebracht. Beim Kippen bewegt sich der Rand der Ladeplattform, d.h. deren Abgabekante von welchem die Ladung abgegeben wird, nur leicht nach aussen, so dass die Ladung in unmittelbarer Nähe der Räder zu Boden fällt. Je nach Ladegut kann dies zu Beschädigungen der Räder und zu einer Be- oder Verhinderung des Wegfahrens führen.

Bei einigen 3-Seiten-Kipper kann die seitliche Klappwand nach unten geklappt werden, so dass die Räder teilweise geschützt sind. Dennoch fliesst beim Entladen ein beträchtlicher Teil des Ladeguts um die Räder, was ein Wegfahren erschwert, oder sogar verunmöglicht.

Falls das Ladegut in eine Grube entladen werden soll, müssen die bekannten 3-Seiten-Kipper gefährlich nahe an den Grubenrand fahren oder ein Teil des Ladeguts muss nach dem Entladen händisch oder maschinell in die Grube geschoben werden.

Aus US1831489 und US2394153 sind 3-Seiten-Kipper bekannt, bei welchen die Seitenladen als Entladerampen verwendet werden. Dabei müssen jedoch die Seitenladen und/oder deren Aufhängung sehr stabil und schwer gebaut sein. Für leichte Lastkraftwagen ist dies nicht geeignet. Auch besteht die Gefahr, dass die Seitenlade beim Kippen derart weit nach unten reicht, dass auf dem entladenen Gut aufliegt und so eine weitergehendes Entladen beeinträchtigt.

Aus DE2013004 ist ein 3-Seiten-Kipper bekannt, bei dem die Ladeplattform in Form einer Ladewanne mit schräg nach oben gerichteten Seitenwänden ausgebildet ist, an welche vertikale seitliche Klappwände anschliessen. Dadurch wird die Abgabekante, d.h. die obere Kante der schrägen Seitenwand, beim Kippen relativ zu den Rädern nach aussen versetzt, so dass das Gut um diesen Versatz weiter aussen abgegeben wird. Die schrägen Seitenwände wirken dabei als Entladerampe. Solche Ladeplattformen sind jedoch nur zum Transport von Schüttgut geeignet. Für Stückladungen z.B. beladene Paletten oder dergleichen ist die wannenförmige Ladeplattform nicht geeignet.

### Darstellung der Erfindung

Eine Aufgabe der Erfindung besteht darin, einen Kippeinrichtung für 3-Seiten-Kipper anzugeben, welche die obigen Probleme nicht aufweist. Insbesondere soll die Kippeinrichtung eine verstärkt progressive Ausladung erlauben.

Diese Aufgabe wird durch die Merkmale des Anspruch 1 gelöst. Bevorzugte Ausführungsarten der Erfindung sind in den abhängigen Ansprüchen angegeben.

Eine Kippeinrichtung für 3-Seiten-Kipper, insbesondere leichte oder mittelschwere Fahrzeuge (z.B. Lastkraftwagen mit zwei Achsen und maximaler Gesamtmasse bis 18 Tonnen oder Anhänger), umfasst eine Kippplattform und eine an der Kippplattform und an einem Fahrzeugchassis gelagerte Hebevorrichtung, vorzugsweise ein hydraulischer Kolbenzylinderantrieb, zur Ausführung einer Kippbewegung der Kippplattform. Die Kippplattform ist an vier in einem Rechteck angeordneten Punkten mittels lösbaren Gelenkverbindungen gelenkig mit dem Fahrzeugchassis verbindbar, so dass eine Kippbewegung nach beiden Seiten und nach hinten möglich ist. Die Gelenkverbindung weist eine erstes Gelenkelement und ein zweites Gelenkelement auf, bevorzugt in Form einer Gelenkkugel respektive einer komplementären Gelenkpfanne. Jeweils das erste Gelenkelement der Gelenkverbindungen ist seitlich nach aussen verschiebbar gelagert. Weiter weist die Kippeinrichtung eine Verschiebeeinrichtung auf, welche derart ausgebildet ist, dass sie beim Ausführen der Kippbewegung durch Verschieben des entsprechenden ersten Gelenkelements eine seitliche Verschiebung der Gelenkverbindung und somit des Kippdrehpunkts in Richtung der entsprechenden Kippbewegung bewirkt.

Eine Abgabekante der Kippplattform, welche immer einen bestimmten Abstand zum Kippdrehpunkt aufweist, wird beim Kippvorgang horizontal nach aussen bewegt. Diese horizontale Bewegung ist abhängig von Kippwinkel (Sinus des Kippwinkels) und von Abstand zwischen Kippdrehpunkt und Abgabekante (Radius). Um eine möglichst grosse Ausladung resp. horizontale Verschiebung der Abgabekante zu erreichen, ist die Gelenkverbindung und somit der Kippdrehpunkt möglichst nahe an der Senkrechten unterhalb der Abgabekante resp. dem Rand der Ladeplattform angeordnet. Der Radius kann durch Tieferlegen der Gelenkverbindung erhöht werden. Diese rotationsabhängige Ausladung ist nicht linear und die relative Zunahme der Ausladung nimmt mit zunehmendem Kippwinkel ab. Mit der zusätzlichen Verschiebeeinrichtung wird der rotationsabhängigen Ausladung eine translationsabhängige, meist lineare Ausladung überlagert, was zu einer verstärkt progressiven Ausladung führt. Die Verschiebung des Kippdrehpunkts setzt beim Einsetzen oder kurz nach dem Einsetzen der Kippbewegung ein.

Im Sinne der vorliegenden Erfindung ist mit Ausladung die horizontale Verschiebung der Ladekante in Bezug zur Nullposition (Kippwinkel von 0 Grad) gemeint. Die Begriffe oben, unten, vorne, hinten, seitlich, links und rechts beziehen sich auf ein Fahrzeug in Fahrtrichtung. Horizontal und vertikal beziehen sich auf ein auf flachem Untergrund stehenden Fahrzeugs.

Die Kippeinrichtung ist über die Gelenkverbindungen mit dem Fahrzeugchassis eines Fahrzeugs (Lastkraftwagen oder Anhänger) verbindbar. Dazu kann sie direkt oder mittels eines Hilfsrahmens auf dem Fahrzeugchassis montiert sein. Die Kippplattform kann als selbsttragenden Ladeplattform oder als eine auf einer Kippplattform montierten Ladeplattform ausgebildet sein.

In einer Ausführungsform kann die Verschiebeeinrichtung derart ausgebildet sein, dass sie erst ab einem vorbestimmten initialen Kippwinkel, vorzugsweise ab einem initialen Kippwinkel von 3 bis 5 Grad, die seitliche Verschiebung der Gelenkverbindungen bewirkt. Dies hat den Vorteil, dass die Gelenkverbindungen auf der gegenüberliegenden Seite, welche beim Kippvorgang nicht als Kipplager dienen, einfach durch Anheben des zweiten Gelenkelements während der initialen Kippbewegung gelöst werden können. Ein allfälliges Verklemmen durch eine seitliche Verschiebung der Kippplattform bevor ein seitliches Gelenkverbindungspaar vollständig gelöst ist, kann so verhindert werden.

In einer Ausführungsform kann das erste Gelenkelement an einer Führungsstange befestigt sein, wobei die Führungsstange bevorzugt in einer Quertraverse geführt ist. Andere Führungen z.B. eine T-Schiene, sind auch möglich. Die Quertraverse kann direkt oder indirekt z.B. mittels eines Hilfsrahmens auf dem Fahrzeugchassis montiert sein. Sie kann auch Teil des Fahrzeugchassis oder des Hilfsrahmens sein.

Die Führungsstange kann einseitig oder beidseitig einen Anschlag aufweisen, welcher die seitliche Verschiebung nach aussen und/oder nach innen begrenzt. Die Führungsstange kann an der der Gelenkverbindung gegenüberliegenden Seite mit einer Feder, vorzugsweise eine Zugfeder, belastet sein, um ein Zurückschieben des ersten Gelenkelements resp. der Gelenkverbindung beim Absenken der Kippplattform in die Nullposition zu unterstützen. Alternativ oder zusätzliche kann an der gegenüberliegenden Gelenkverbindung eine Führung vorhanden sein, welche die Kippplattform und so die als Kipplager fungierende Gelenkverbindung vor Erreichen eines Kippwinkels von 3 bis 5 Grad wieder in die seitlichen Nullposition zwingt. Diese Führung kann beispielsweise durch die Gelenkkugel und den Gelenkpfosten ausgebildet sein. Bei einer Gelenkkugel als erstes Gelenkelement erfolgt die Verschiebung in die Nullposition ab den letzte 3 bis 5 Grad durch die Zentrierung des zweiten Gelenkelements resp. der Gelenkpfanne auf der Gelenkkugel. Die Initialstellung also durch das Einfahren der gegenüberliegenden Kipplager erreicht werden.

In einer Ausführungsform kann das zweite Gelenkelement direkt unterhalb der Kippplattform befestigt sein. Vorzugsweise umfasst das zweite Gelenkelement einen senkrecht verlängerten Gelenkpfosten. Idealerweise ist das zweite Gelenkelement resp. die Gelenkverbindung in der Senkrechten möglichst weit aussen resp. möglichst nahe an der Abgabekante angeordnet und zwar so, dass die Gelenkverbindung resp. die Verschiebeeinrichtung gerade nicht über die Abgabekante vorsteht. Mittels verlängerten Gelenkpfosten kann die Gelenkverbindung resp. der Kippdrehpunkt sogar tiefer als die Oberkante der Räder resp. deren Kotflügel angeordnet sein, was neben der grösseren Ausladung auch eine geringere Bauhöhe und somit einen tieferen Schwerpunkt erlaubt.

Bei allen Ausführungsformen ist die Verschiebeeinrichtung in der Regel derart ausgestaltet, dass die Gelenkverbindungen rechts bzw. links jeweils synchron miteinander die seitlich Verschiebung ausführen. Bei einer Kippbewegung nach hinten findet keine Verschiebung statt.

In einer Ausführungsform kann die Verschiebeeinrichtung eine mechanische Zwangsführung umfassen. Diese umfasst vorzugsweise ein mit der Kippplattform oder dem Gelenkpfosten verbundenes Zahnradsegment und eine komplementäre, mit dem Fahrzeugchassis, der Quertraverse oder dem Hilfsrahmen wirkverbundene Zahnstange. Durch die Kippbewegung greift das Zahnradsegment in die gerade Zahnstange ein. Bei fortlaufender Kippbewegung resultiert dabei eine seitliche, horizontale Verschiebung des ersten Gelenkelements und somit der gesamten Kippplattform. Beim Zurückfahren in die Nullposition erfolgt eine entgegengesetzte Verschiebung.

Mit der Anordnung der Gelenkverbindung kann die rotationsabhängige Ausladung eingestellt werden. Ein geringerer Radius führt zu einer geringeren rotationsabhängigen Ausladung, und umgekehrt. Mit der Anordnung des Zahnradsegments und der Zahnstange kann die translationsabhängige Ausladung eingestellt werden. Je tiefer diese relativ zum Kippdrehpunkt angeordnet sind, je grösser ist die translationsabhängige Ausladung.

In einer Ausführungsform kann das Zahnradsegment gegenüber der Zahnstange einen Versatz aufweisen, z.B. leicht nach oben und aussen versetzt angeordnet sein, so dass Zahnradsegment und Zahnstange erst nach Erreichen des initialen Kippwinkels ineinander eingreifen und so die Gegen-Gelenkverbindung vor der seitlichen Verschiebung gelöst werden kann.

Das Zahnradsegment kann mit einer Verschalung versehen sein, um eine Verletzungsgefahr zu verringern. Weiter kann das Zahnradsegment resp. die Zahnstange, insbesondere bei den beiden hinteren Gelenkverbindungen, derart angeordnet sein, dass es beim nach hinten Kippen der Ladeplattform nicht am ersten Gelenkelement anstösst. Dazu kann das Zahnradsegment vorne bei den hinteren Gelenkverbindungen angeordnet sein, so dass es beim Kippvorgang nach von dem ersten Gelenkelement resp. der Zahnstange nach vorne wegklappt. Die Zahnstange kann dazu nach vorne offen ausgestaltet sein.

In einer Ausführungsform kann die Verschiebeeinrichtung anstelle des Zahnradsegments einen Anlegehebel mit einer Rolle und anstelle der Zahnstange eine Anschlagsplatte aufweisen. Während der Kippbewegung liegt die Rolle des Anlegehebels auf die Anschlagsplatte auf und das erste Gelenkelement wird seitlich hinaus geschoben. Auch hier kann mit der Wahl der Anordnung von Gelenkverbindung und Angriffspunkt für die Verschiebeeinheit das Verhältnis zwischen rotationsabhängiger und translationsabhängiger Ausladung eingestellt werden.

In einer Ausführungsform kann die Hebevorrichtung am Fahrzeugchassis oder Hilfsrahmen kardanisch gelagert sein. Dabei kann die mechanische Verschiebeeinrichtung resp. Zwangsführung die seitliche Rotation des kardanischen Lagers nutzen indem diese mit einem Zahnrad in Wirkverbindung steht, welches wiederum in eine mit dem ersten Gelenkelement verbundenen Zahnstange eingreift. Die Drehung des kardanischen Lagers wird dabei direkt resp. mit einem Versatz für die Verschiebung des ersten Gelenkelements genutzt. In der Regel sind dann die beiden vorderen ersten Gelenkelement und die beiden hinteren ersten Gelenkelement jeweils fest miteinander verbunden und bewegen sich gleichzeitig.

In einer Ausführungsform ist die Verschiebeeinrichtung im Unterschied zur beschriebenen mechanischen Verschiebeeinrichtung eine hydraulische Verschiebeeinrichtung, wobei das erste seitlich nach aussen verschiebbar gelagerte Gelenkelement jeweils mit einem Hydraulikzylinder wirkverbunden ist. Dieser Hydraulikzylinder kann mit einer Hydraulikpumpe einer hydraulischen Hebevorrichtung verbunden sein und kann derart angesteuert sein, z.B. über ein Hydraulikventil, dass die seitliche Verschiebung des ersten Gelenkelements (und somit der Kippplattform) erst nach einem initialen Kippwinkel von 3 bis 5 Grad beginnt. Eine separate Ansteuerung ist auch möglich. Das erste und das zweite Gelenkelement können gleich ausgebildet sein wie bei der mechanischen Verschiebeeinrichtung mit Führungsstange und Gelenkpfosten.

In einer Ausführungsform können die vorderen beiden Gelenkelement und die hinteren beiden Gelenkelement jeweils beidseitig an einer durchgehenden Führungsstange befestigt sein, welche von der Hydraulik entweder nach links oder rechts bewegt wird. Die vorderen resp. die hinteren beiden Gelenkelement können jeweils mit einem Hydraulikzylinder versehen sein, welcher eine Verschiebung zu beiden Seiten hin erlaubt.

In einer Ausführungsform können alle vier ersten Gelenkelement miteinander verbunden sein, so dass alle mit einem einzigen Hydraulikzylinder bedient werden können.

Bei der Verwendung einer hydraulischen Verschiebeeinrichtung kann diese derart gesteuert sein, dass nach der initialen Kippbewegung erst die translatorische seitliche Verschiebung ausgeführt wird und anschliessend die Kippbewegung fortgesetzt wird. Alternativ können die seitliche Verschiebung und die Kippbewegung gleichzeitig stattfinden.

Kombinationen der beschrieben hydraulischen und mechanischen Komponenten der Verschiebeeinrichtungen sind auch denkbar.

Die beschriebene Verschiebeeinrichtung kann auch genutzt werden, um die am Fahrzeugchassis oder Hilfsrahmen gelagerte Hebevorrichtung seitlich zu verschieben und so die Krafteinwirkung auf die Kippplattform zu optimieren.

Weiter kann die Verschiebeeinrichtung auch so ausgestaltet sein, dass eine Verschiebung nach hinten möglich ist. Dies kann auch als separate Erfindung betrachtet werden.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine perspektivische eines 3-Seiten-Kippers;
- Fig. 2: eine perspektivische des 3-Seiten-Kippers mit seitlich gekippter Ladeplattform;
- Fig. 3(a): ein Ansicht einer Kippeinrichtung mit ungekippter Ladeplattform;
- Fig. 3(b): eine Detailansicht einer Gelenkverbindung der Kippeinrichtung aus Fig. 3(a);
- Fig. 4(a): ein Ansicht einer Kippeinrichtung mit der Ladeplattform zu 25 Grad gekippt;
- Fig. 4(b): eine Detailansicht einer Gelenkverbindung der Kippeinrichtung aus Fig. 4(a);
- Fig. 5(a): ein Ansicht einer Kippeinrichtung mit der Ladeplattform zu 50 Grad gekippt;
- Fig. 5(b): eine Detailansicht einer Gelenkverbindung der Kippeinrichtung aus Fig. 5(a);
- Fig. 6: eine Explosionsansicht einer Gelenkverbindung mit Zwangsführung;
- Fig. 7: eine Detailansicht einer hinteren Gelenkverbindung mit Rückwärtskippung; und
- Fig. 8: eine Diagramm der Ausladung in Abhängigkeit vom Kippwinkel.

### Wege zur Ausführung der Erfindung

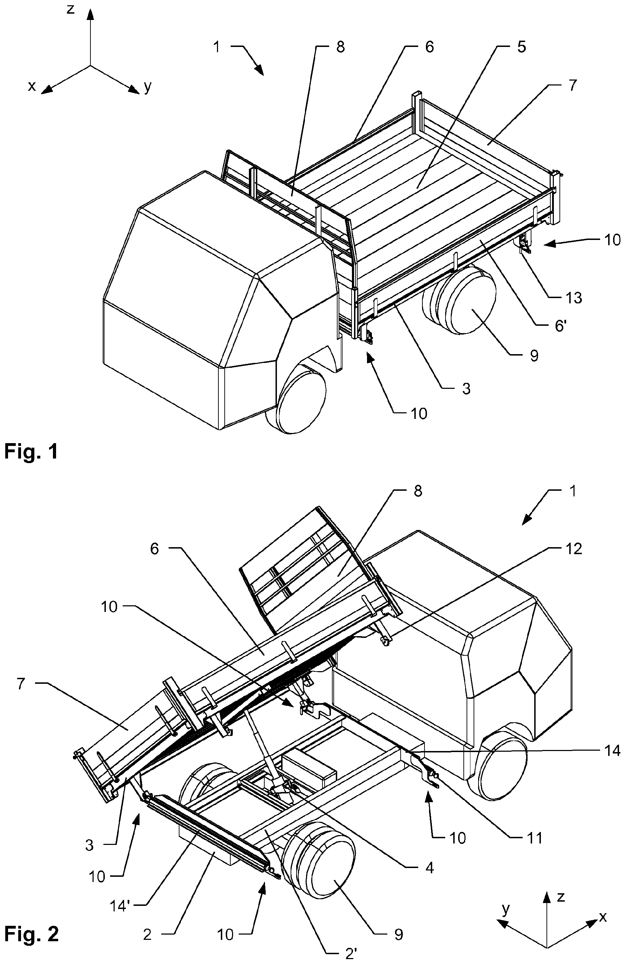

Fig. 1 und Fig. 2 zeigen jeweils eine perspektivische Ansicht eines 3-Seiten-Kippers 1 in der Form eines leichten Lastkraftwagens. Der 3-Seiten-Kipper 1 ist mit einer Kippeinrichtung versehen, welche einen auf dem Fahrzeugchassis 2 montierten Hilfsrahmen 2', eine Kippplattform 3 und eine Hebevorrichtung 4 in Form eines hydraulischen Kolbenzylinderantriebs zur Ausführung einer Kippbewegung der Kippplattform 3 umfasst. Die Kippplattform 2 ist als selbsttragende Ladeplattform 5 ausgestaltet und weist zwei Seitenladen 6, 6', einen Hinterladen 7 und eine Vorderwand 8 auf.

Jeweils unterhalb den Eckbereichen der Ladeplattform 5 sind an vier in einem Rechteck angeordneten Punkten lösbare Gelenkverbindungen 10 angeordnet, welche die Kippplattform 3 gelenkig mit dem Fahrzeugchassis 2 resp. dem Hilfsrahmen 2' verbinden, so dass eine Kippbewegung nach beiden Seiten und nach hinten möglich ist. Je nach dem in welche Richtung die Kippbewegung ausgeführt werden soll, können die Gelenkverbindungen 10 gelöst oder mit einem Arretierbolzen 13 fixiert werden.

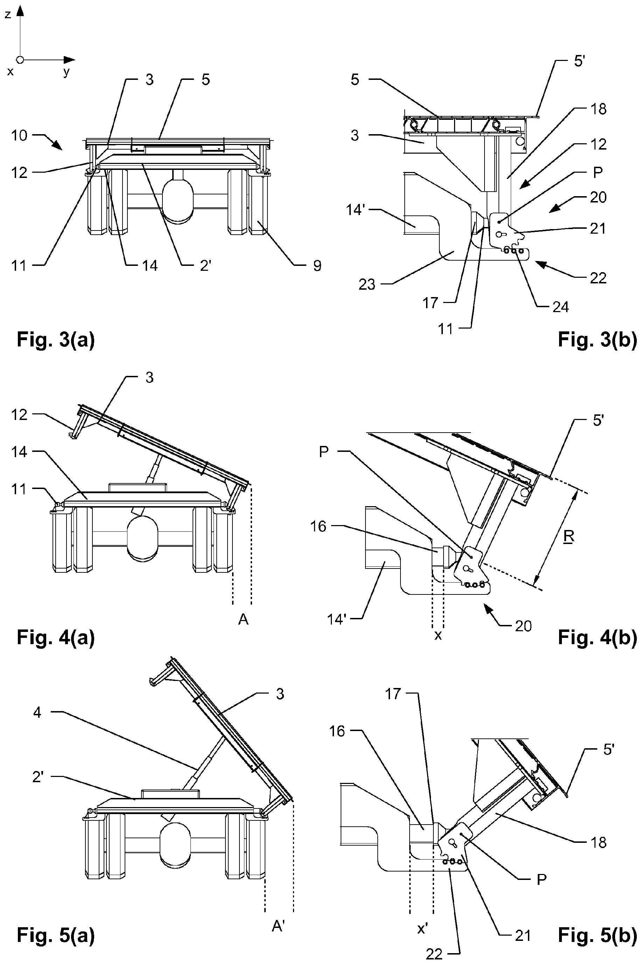

Die Figuren 3 bis 5 zeigen die Kippeinrichtung mit drei unterschiedlichen Kippwinkeln (0 Grad, 25 Grad, 50 Grad) jeweils in einer Frontansicht (Fig.3(a), 4(a), 5(a)), wobei übersichtshalber einige Teile des 3-Seiten-Kippers nicht dargestellt sind, und in einer Detailansicht (Fig.3(b), 4(b), 5(b)) eines Gelenkelements 10 mit einer mechanischen Verschiebeeinrichtung 20.

Die Gelenkverbindungen 10 umfassen jeweils ein erstes Gelenkelement 11, welches in einer vorderen oder hinteren Quertraverse 14, 14' des Hilfsrahmens 2' verschiebbar gelagert ist, und jeweils ein zweites Gelenkelement 12, welches an der Kippplattform 3 befestigt ist. In den Figuren 3(a), 4(a) und 5(a) sind die vorderen beiden Gelenkverbindungen 10 und die vordere Quertraversen 14 erkennbar. Die Figuren 3(b), 4(b) und 5(b) zeigen jeweils eines der hinteren Gelenkverbindungen 10 und die hinteren Quertraverse 14'.

Das erste Gelenkelement 11 ist in der gezeigten Ausführungsform eine Gelenkkugel, welche an einer Führungsstange 16 befestigt ist. Die Führungsstange 16 ist in der Quertraverse 14, 14' des Hilfsrahmens 2' seitlich horizontal verschiebbar geführt. Die Führungsstange 16 kann Anschläge aufweisen, welche die Verschiebbarkeit begrenzen. In der gezeigten Ausführungsform weist die Führungsstange 16 einen äusseren Anschlag 17 auf, der in der Nullposition in Anschlag mit der Quertraverse 14, 14' ist. Weiter kann die Führungsstange 16 an der der Gelenkverbindung 10 gegenüberliegenden Seite mit einer Feder, vorzugsweise eine Zugfeder, belastet sein, um ein Zurückschieben des ersten Gelenkelements 11 resp. der Gelenkverbindung 10 beim Absenken der Kippplattform 3 in die Nullposition zu unterstützen und/oder ein Herausfallen eine gelösten ersten Gelenkelements zu unterbinden.

Das zweite Gelenkelement 12 umfasst in der gezeigten Ausführungsform einen senkrecht verlängerten Gelenkpfosten 18 mit einer endständigen Gelenkpfanne, in welche die Gelenkkugel des ersten Gelenkelements 11 drehbar gelagert ist. Der verlängerte Gelenkpfosten 18 erlaubt eine tiefgelegte Anordnung der Gelenkverbindung 10 resp. des Kippdrehpunkts P im oberen Bereich der Räder 9 ohne mit diesen oder deren Kotflügel bei einer Kippbewegung zu interferieren.

Die Gelenkverbindungen 10 sind jeweils am Randbereich der Ladeplattform 5 so weit aussen wie möglich angeordnet, so dass keine Teile der Gelenkverbindung und der Verschiebeeinrichtung über den Abgabekante 5' der Ladeplattform 5 hinausragen.

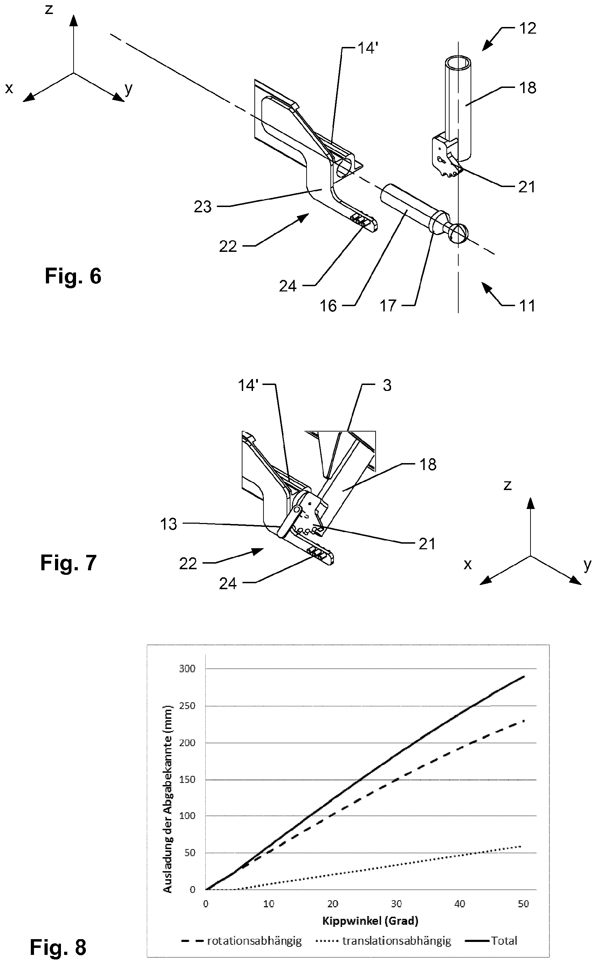

In der gezeigten Ausführungsform ist die Verschiebeeinrichtung 20 als mechanische Zwangsführung ausgebildet. Die Verschiebeeinrichtung 20 umfasst ein mit dem verlängerten Gelenkpfosten 18 verbundenes Zahnradsegment 21 und eine mit dem Fahrzeugchassis 2 resp. der Quertraverse 14, 14' des Hilfsrahmens 2' verbundene Zahnstange 22. Wobei mit Zahnstange eine lineares Gegenstück zum Zahnradsegment gemeint ist, so dass eine rotative Bewegung in eine translatorische Bewegung umgewandelt werden kann. Die Zahnstange 22 umfasst einen Trägerarm 23 mit einer linearen Zahnung 24, welche parallel zur Führungsstange 16 des ersten Gelenkelements 11 ausgerichtet ist. Fig. 6 zeigt die Bestandteile des Gelenkelements und der mechanischen Verschiebeeinrichtung in einer Explosionsdarstellung.

Während der Kippbewegung dreht sich das Zahnradsegment 21 um den Kippdrehpunkt P der Gelenkverbindung 10. Dabei gelangt das Zahnradsegment 21 in Eingriff mit der Zahnung 24 der Zahnstange, welche an der Quertraverse 14, 14' oder am Fahrzeugchassis 2 fixiert ist und schiebt resp. zieht so das erste Gelenkelement 11 aus der Quertraverse 14' des Hilfsrahmens 2', wobei sich auch der Kippdrehpunkt P horizontal seitlich nach aussen verlagert. Die rotative Bewegung des Zahnradsegments 21 wird in eine translatorische Verschiebung x, x' umgewandelt.

Bereits die Kippbewegung alleine führt zu einer horizontalen Verschiebung der Abgabekante 5' der Ladeplattform 5 seitlich nach aussen. Diese rotationsabhängige Ausladung ist abhängig vom Kippwinkel und vom Radius R (Abstand der Abgabekante 5' zum Kippdrehpunkt P). Dieser rotationsabhängigen Ausladung wird zusätzlich die translationsabhängige Ausladung x, x' überlagert was bei zunehmendem Kippwinkel zu einer verstärkt progressiven Ausladung A, A' relativ zu den Rädern führt.

Das Zahnradsegment 21 weist gegenüber der Zahnstange 22 einen geringfügigen Versatz auf, so dass es erst nach einer initialen Kippbewegung von 3- bis 5 Grad in die Zahnstange 22 eingreift und die translatorischen Verschiebung bewirkt.

Fig. 7 zeigt eine Detailansicht einer hinteren Gelenkverbindung 10 im Zustand bei einer Kippbewegung nach hinten. Um ein Verklemmen der Verschiebeeinrichtung mit der Gelenkverbindung zu verhindern, ist bei den hinteren Gelenkverbindungen 10 das Zahnradsegment 21 jeweils an der Vorderseite der Gelenkverbindung 10 angeordnet, so dass es beim Rückwärtskippen der Kippplattform 3 von der Gelenkverbindung 10 wegklappt. Dazu ist die Zahnung 24 der Zahnstange 22 nach vorne hin offen ausgebildet.

In Fig. 8 ist ein Diagramm gezeigt, welches den Effekt der verstärkt progressiven Ausladung durch Überlagerung der rotationsabhängigen Ausladung und der translationsabhängigen Ausladung veranschaulicht. Die Werte wurden aufgrund eines Radius von 300 mm und einer maximalen translatorischen Ausladung von 60 mm bei einem Kippwinkel von 50 Grad berechnet. Je nach Anordnung des Kippdrehpunkts und des Angriffspunkts der Verschiebeeinrichtung kann das Verhältnis zwischen rotationsabhängiger und translationsabhängiger Ausladung verändert werden.

### Bezeichnungsliste

- 1: 3-Seiten-Kipper
- 2: Fahrzeugchassis
- 2': Hilfsrahmen
- 3: Kippplattform
- 4: Hebevorrichtung
- 5: Ladeplattform
- 5': Abgabekante
- 6, 6': Seitenladen
- 7: Hinterladen
- 8: Vorderwand
- 9: Räder
- 10: Gelenkverbindung
- 11: erstes Gelenkelement
- 12: zweites Gelenkelement
- 13: Arretierbolzen
- 14, 14': Quertraverse
- 16: Führungsstange
- 17: Anschlag
- 18: verlängerter Gelenkpfosten
- 20: Verschiebeeinrichtung
- 21: Zahnradsegment
- 22: Zahnstange
- 23: Trägerarm
- 24: lineare Zahnung
- A: Ausladung
- P: Kippdrehpunkt
- R: Radius
- x, x': translatorische Verschiebung

## Patentansprüche

1. Kippeinrichtung für 3-Seiten-Kipper (1), insbesondere leichte oder mittelschwere Fahrzeuge, umfassend eine Kippplattform (3) und eine an der Kippplattform (3) und an einem Fahrzeugchassis (2) gelagerte Hebevorrichtung (4) zur Ausführung einer Kippbewegung der Kippplattform (3); wobei die Kippplattform (3) an vier in einem Rechteck angeordneten Punkten mittels lösbaren Gelenkverbindungen (10) gelenkig mit dem Fahrzeugchassis (2) verbindbar ist, so dass eine Kippbewegung nach beiden Seiten und nach hinten möglich ist; wobei die Gelenkverbindung (10) eine erstes Gelenkelement (11) und ein zweites Gelenkelement (12) aufweist; **dadurch gekennzeichnet, dass** jeweils das erste Gelenkelement (11) der Gelenkverbindungen (10) seitlich nach aussen verschiebbar gelagert ist und dass die Kippeinrichtung eine Verschiebeeinrichtung (20) aufweist, welche derart ausgebildet ist, dass sie beim Ausführen der Kippbewegung durch Verschieben des entsprechenden ersten Gelenkelements (11) eine seitliche Verschiebung der Gelenkverbindung (10) und somit des Kippdrehpunkts (P) in Richtung der entsprechenden Kippbewegung bewirkt.

2. Kippeinrichtung nach Anspruch 1, **dadurch gekennzeichnet, dass** die Verschiebeeinrichtung (20) derart ausgebildet ist, dass sie erst ab einem vorbestimmten initialen Kippwinkel, vorzugsweise ab einem initialen Kippwinkel von 3 bis 5 Grad, die seitliche Verschiebung der Gelenkverbindungen (10) bewirkt.

3. Kippeinrichtung nach einem der vorangehenden Ansprüche, **dadurch gekennzeichnet, dass** das erste Gelenkelement (11) an einer Führungsstange befestigt ist, wobei die Führungsstange (16) bevorzugt in einer Quertraverse (14, 14') geführt ist.

4. Kippeinrichtung nach Anspruch 3, **dadurch gekennzeichnet, dass** die Quertraverse (14, 14') direkt oder mittels eines Hilfsrahmens (2') auf dem Fahrzeugchassis (2) montiert ist.

5. Kippeinrichtung nach einem der vorangehenden Ansprüche, **dadurch gekennzeichnet, dass** das zweite Gelenkelement (12) unterhalb der Kippplattform (3) befestigt ist und vorzugsweise einen senkrecht verlängerten Gelenkpfosten (18) umfasst.

6. Kippeinrichtung nach einem der vorangehenden Ansprüche, **dadurch gekennzeichnet, dass** die Verschiebeeinrichtung (20) eine mechanische Zwangsführung umfasst.

7. Kippeinrichtung nach Anspruch 6, **dadurch gekennzeichnet, dass** die mechanische Zwangsführung ein mit der Kippplattform (3) oder dem Gelenkpfosten (18) verbundenes Zahnradsegment (21) und eine komplementäre, mit dem Fahrzeugchassis (2) wirkverbundene Zahnstange (22) umfasst.

8. Kippeinrichtung nach einem der Ansprüchen 6 bis 7, **dadurch gekennzeichnet, dass** das Zahnradsegment (21) gegenüber der Zahnstange (22) einen Versatz aufweist, so dass Zahnradsegment (21) und Zahnstange (22) erst nach Erreichen des initialen Kippwinkels ineinander eingreifen.

9. Kippeinrichtung nach einem der Ansprüchen 1 bis 5, **dadurch gekennzeichnet, dass** die Verschiebeeinrichtung eine hydraulische Verschiebeeinrichtung ist, wobei das erste seitlich nach aussen verschiebbar gelagerte Gelenkelement mit einem Hydraulikzylinder verbunden ist.

10. Kippeinrichtung nach Anspruch 9, **dadurch gekennzeichnet, dass** der Hydraulikzylinder mit einer Hydraulikpumpe einer hydraulischen Hebevorrichtung verbunden ist.

11. Kippeinrichtung nach einem der Ansprüchen 9 bis 10, **dadurch gekennzeichnet, dass** der Hydraulikzylinder derart gesteuert ist, dass die seitliche Verschiebung erst ab dem initialen Kippwinkel einsetzt.

## Claims

1. Tipper device for 3-sided tipper trucks (1), in particular light or medium-weight vehicles, comprising a tipper platform (3) and a lifting device (4) borne on the tipping platform (3) and on a vehicle chassis (2) for performing a tipping movement of the tipping platform (3); wherein the tipping platform (3) is connectable in an articulated manner to the vehicle chassis (2) by means of detachable articulated connections (10) at four points arranged in a rectangle so that a tipping movement towards both sides and backwards is possible; wherein the articulated connection (10) comprises a first articulated element (11) and a second articulated element (12); **characterised in that** in each case the first articulated element (11) of the articulated connections (10) is borne so as to be laterally displaceable to the outside and the tipping device comprises a displacement device (20) which is designed in such a way that when performing the tilting movement, through displacement of the corresponding first articulated element (11) it brings about a lateral displacement of the articulated connection (10) and thus the point of rotation of tipping (P) in the direction of the respective tipping movement.

2. Tipping device according to claim 1 **characterised in that** the displacement device (20) is designed in such a way that it only brings about the lateral displacement of the articulated connections (10) as of a predetermined initial tipping angle, preferably as of an initial tipping angle of 3 to 5 degrees.

3. Tipping device according to any one of the preceding claims **characterised in that** the first articulated element (11) is attached to a guide rod, wherein the guide rod (16) preferably extends in a crosspiece (14, 14').

4. Tipping device according to claim 3 **characterised in that** the crosspiece (14, 14') is mounted directly, or by way of an auxiliary frame (2'), on the vehicle chassis (2).

5. Tipping device according to any one of the preceding claims **characterised in that** the second articulated element (12) is attached below the tipping platform (3) and preferably comprises a vertically extended articulated shaft (18).

6. Tipping device according to any one of the preceding claims **characterised in that** the displacement device (20) comprises a mechanical forced guidance system.

7. Tipping device according to claim 6 **characterised in that** the mechanical forced guidance system comprises a gear wheel segment (21) connected to the tipping platform (3) or the articulated shaft (18) and a complementary rack (22) operatively connected to the vehicle chassis (2).

8. Tipping device according to any one of claims 6 to 7 **characterised in that** the gear wheel segment (21) is offset relative to the rack (22) so that the gear wheel segment (21) and the rack (22) only engage with each other after reaching the initial tipping angle.

9. Tipping device according to any one of claims 1 to 5 **characterised in that** the displacement device is a hydraulic displacement device, wherein the first articulated element, borne laterally displaceable towards the outside, is connected to a hydraulic cylinder.

10. Tipping device according to claim 9 **characterised in that** the hydraulic cylinder is connected to a hydraulic pump of a hydraulic lifting device.

11. Tipping device according to any one of claims 9 to 10 **characterised in that** the hydraulic cylinder is controlled in such a way that the lateral displacement only commences as of the initial tipping angle.

## Revendications

1. Dispositif de basculement destiné à une benne basculante sur 3 côtés (1), notamment à des véhicules de poids léger à moyen, comprenant une plate-forme basculante (3) et un dispositif de levage (4) logé sur la plate-forme basculante (3) et sur un châssis de véhicule (2) pour la réalisation d'un déplacement basculant de la plate-forme basculante (3) ; sur quatre points placés dans un rectangle, la plate-forme basculante (3) pouvant être assemblée de manière articulée, au moyen de liaisons articulées (10) amovibles avec le châssis de véhicule (2), de sorte qu'un déplacement basculant soit possible vers les deux côtés et vers l'arrière ; la liaison articulée (10) comportant un premier élément articulé (11) et un deuxième élément articulé (12) ; **caractérisé en ce que** chaque fois le premier élément articulé (11) des liaisons articulées (10) est logé en étant déplaçable latéralement vers l'extérieur et **en ce que** le dispositif de basculement comporte un dispositif de déplacement (20), lequel est conçu de telle sorte que lors de la réalisation du déplacement basculant, en déplaçant le premier élément articulé (11) correspondant, il provoque un déplacement latéral de la liaison articulée (10) et ainsi du point de basculement (P) dans la direction du déplacement basculant correspondant.

2. Dispositif de basculement selon la revendication 1, **caractérisé en ce que** le dispositif de déplacement (20) est conçu de telle sorte, que seulement à partir d'un angle initial de basculement prédéfini, de préférence à partir d'un angle initial de déplacement de 3 à 5 degrés, il provoque le déplacement latéral des liaison articulées (10).

3. Dispositif de basculement selon l'une quelconque des revendications précédentes, **caractérisé en ce que** le premier élément articulé (11) est fixé sur une barre de guidage, la barre de guidage (16) étant guidée de préférence dans une traverse (14, 14').

4. Dispositif de basculement selon la revendication 3, **caractérisé en ce que** la traverse (14, 14') est montée directement ou au moyen d'un cadre auxiliaire (2') sur le châssis de véhicule (2).

5. Dispositif de basculement selon l'une quelconque des revendications précédentes, **caractérisé en ce que** le deuxième élément articulé (12) est fixé en-dessous de la plate-forme basculante (3) et comprend de préférence un montant vertical d'articulation (18) prolongé à la verticale

6. Dispositif de basculement selon l'une quelconque des revendications précédentes, **caractérisé en ce que** die dispositif de déplacement (20) comprend un guidage forcé mécanique.

7. Dispositif de basculement selon la revendication 6, **caractérisé en ce que** le guidage forcé mécanique comprend un segment de roue dentée (21) relié avec la plate-forme basculante (3) ou avec le montant vertical d'articulation (18) et une crémaillère (22) complémentaire, fonctionnellement reliée avec le châssis de véhicule (2).

8. Dispositif de basculement selon l'une quelconque des revendications 6 ou 7, **caractérisé en ce que** le segment de roue dentée (21) présente un déport par rapport à la crémaillère (22), de telle sorte que le segment de roue dentée (21) et la crémaillère (22) ne s'engrènent l'un dans l'autre qu'après l'atteinte de l'angle de basculement initial.

9. Dispositif de basculement selon l'une quelconque des revendications 1 à 5, **caractérisé en ce que** le dispositif de déplacement est un dispositif de déplacement hydraulique, le premier élément articulé logé en étant déplaçable latéralement vers l'extérieur étant relié avec un vérin hydraulique.

10. Dispositif de basculement selon la revendication 9, **caractérisé en ce que** le vérin hydraulique est relié avec une pompe hydraulique d'un dispositif de levage hydraulique.

11. Dispositif de basculement selon l'une quelconque des revendications 9 ou 10, **caractérisé en ce que** le vérin hydraulique est commandé de telle sorte, que le déplacement latéral n'intervienne qu'à partir de l'angle de basculement initial.
